# EUROPEAN PATENT SPECIFICATION

(11) **EP 3 049 756 B1**
(45) Date of publication and mention of the grant of the patent: **01.12.2021**
(21) Application number: 14806335.7
(22) Date of filing: 25.09.2014
(51) Int. Cl.: G01B 11/25

(54) **MODELING ARRANGEMENT AND METHOD AND SYSTEM FOR MODELING THE TOPOGRAPHY OF A THREE-DIMENSIONAL SURFACE**
MODELLIERUNGSANORDNUNG SOWIE VERFAHREN UND SYSTEM ZUR MODELLIERUNG DER TOPOGRAFIE EINER DREIDIMENSIONALEN OBERFLÄCHE
DISPOSITIF ET PROCÉDÉ DE MODÉLISATION ET SYSTÈME DE MODÉLISATION DE LA TOPOGRAPHIE D'UNE SURFACE TRIDIMENSIONNELLE

(30) Priority: 25.09.2013 FI 20135961
(43) Date of publication of application: 03.08.2016
(73) Proprietor: LaDiMo Oy, 02130 Espoo (FI)
(72) Inventor: PALMÉN, Jorma, FI-00950 Helsinki (FI)
(74) Representative: Papula Oy
(86) International application number: PCT/FI2014/050730
(87) International publication number: WO 2015/044524

(56) References cited:
- US-A1- 2004 105 100
- US-A1- 2004 119 035
- US-A1- 2005 128 196
- US-A1- 2005 185 194
- US-A1- 2012 236 288
- None

## Description

### FIELD OF THE INVENTION

The invention relates to photogrammetry and specifically to monophotogrammetry.

### BACKGROUND OF THE INVENTION

Photogrammetry makes use of mapping or modeling based on photographs taken of an object of interest. There are numerous applications in which for example three-dimensional imaging conducted by means of machine vision is very useful. In general, these systems include for example a camera, a lighting device, a computer and a connection to a control system managing the equipment. Laser scanning is a measuring method for obtaining, by means of laser beams, dimensionally accurate three-dimensional information of an object without touching the object.

Another way of three-dimensionally modeling an object is to use laser scanning. In laser scanning, a measuring scanner automatically emits laser beams as a dense raster. The density of the beams is adjustable, and for example in building measurement it may be less than 10mm on target and in more remotely conducted forest stand or terrain mapping for example approximately 10cm. As the beam reflects from an obstacle, the scanner will measure the distance and change of beam intensity and calculate the coordinates for the point of reflection. In laser scanning, the target is generally scanned from a plurality of directions to avoid shadow areas, and the scannings are combined into a file. As a result, the scannings give a point cloud which is a three-dimensional computer model in which the point of reflection of each beam is substituted with a point. With numerous points, the three-dimensional surface of the target can be outlined from the point cloud. From the same physical point at which the scanning was conducted, a series of photographs can be later taken to obtain, by optical correction calculation, the color information in the visible light wavelength range for the points of the point cloud.

In stereophotogrammetry, a three-dimensional object is modeled by taking two or more photographs of the object from different camera positions and identifying the common points in each photograph.

Patent publication FI 121400 discloses one solution for providing a three-dimensional model. In it, substantially monochromatic electromagnetic radiation is projected to the surface of an object, and the pattern provided on the surface of the object is measured by at least two optical sensors. The solution allows for example the determination of a three-dimensional model of a tree before cutting and processing the tree trunk by a forest machine. The problems of this solution include for example low intensity of individual points and thus the resolution of their position, as well as measurement errors due to low accuracy of the relative angles of beams emitted from the light source.

US 2004/119035 A1 relates to object surface characterization using optical triangulation ranging.

US 2004/105100 A1 discloses a solution for determining on an object having a surface, three-dimensional position information of a point on the surface of the object.

US 2005/128196 A1 discloses a solution for actively modeling scenes using structured light. In the solution, a plurality of light beams are projected onto the scene and their imaged projections are analyzed to capture surface information of the scene at a plurality of dots where the light beams intersect the scene. Surface information is used to register consecutive video frames and to construct a 3D model of the scene.

US 2005/185194 A1 discloses a solution for identification and labeling of beam images of a structured beam matrix.

US 2012/236288 A1 discloses a ranging apparatus capable of projecting patterns of structured light tailored for use at particular ranges or depth regimes. Detected light points in a scene can be compared to predetermined pattern templates to provide a simple and low cost gesture recognition system.

Other problems of known solutions include for example complexity of optical corrections, uncertainty in successfully identifying the center of individual points, inaccuracy in calculation of the identified points, and slow modeling calculation because of the heavy processing of point identification implemented with texture-based pattern recognition.

### SUMMARY OF THE INVENTION

According to first aspect of the invention, a modeling arrangement is disclosed for modeling the topography of a three-dimensional surface. The arrangement comprises a light source arranged to produce substantially monochromatic and coherent electromagnetic radiation; a camera arranged to photograph the surface to be modeled at wavelengths emitted by the light source as well as wavelengths detected by the human eye; and a grating provided in connection with the light source. The light source and the grating provided in connection with the light source are arranged jointly to produce a diffraction pattern of a known geometry on the surface to be modeled, wherein the diffraction pattern is a pattern that accurately complies with a mathematical-physical model and wherein beam output angles of the diffraction pattern are accurately known based on the mathematical-physical model, the modeling arrangement being calibrated, and hence having calibration information, so that the relative orientations of the optical axis of the camera and the diffraction axis are known and that the position, distance and orientation of the output point of the grating to the starting point of the optical axis of the camera are known and so that the calibration takes into account the calibration information that corrects the optical distortions of the lens of the camera. The modelling arrangement is configured to calculate a depth position of each point of a network of points produced by the diffraction pattern based on a single photograph of the camera using the calibration information from the modelling arrangement, wherein the optical distortions of the photograph are corrected by the calibration information by moving the pixels of the photograph to correct positions.

In one embodiment, the light source is arranged to produce one wavelength. In another embodiment, the light source is arranged to produce more than one wavelength.

In one embodiment, the light source is arranged simultaneously to emit red substantially monochromatic and coherent electromagnetic radiation, green substantially monochromatic and coherent electromagnetic radiation and blue substantially monochromatic and coherent electromagnetic radiation.

In one embodiment, the modeling arrangement comprises three light sources and a grating provided in connection with each light source, wherein the first light source is arranged to emit red substantially monochromatic and coherent electromagnetic radiation, the second light source is arranged to emit green substantially monochromatic and coherent electromagnetic radiation and the third light source is arranged to emit blue substantially monochromatic and coherent electromagnetic radiation.

According to a second aspect of the invention, a computer-implemented method is disclosed for modeling the topography of a three-dimensional surface. The method comprises using calibration information from a modeling arrangement comprising a camera arranged to photograph the surface to be modeled at wavelengths emitted by a light source as well as wavelengths detected by the human eye, a light source which is arranged to produce substantially monochromatic and coherent electromagnetic radiation, and a grating provided in connection with the light source, wherein the calibration information indicates the relative orientations of the optical axis of the camera and the diffraction axis, and the position, distance and orientation of the output point of the grating to the starting point of the optical axis of the camera as well as the geometry of the diffraction pattern produced by the modeling arrangement as well as the calibration information that corrects the optical distortions of the lens of the camera, wherein the diffraction pattern is a pattern that accurately complies with a mathematical-physical model and wherein beam output angles of the diffraction pattern are accurately known based on the mathematical-physical model; analyzing a first photograph of the surface to be modeled on which the diffraction pattern has been produced by said modeling arrangement; identifying the points of a network of points produced by the diffraction pattern in the first photograph; and calculating a depth position for each point using the calibration information from the modelling arrangement, wherein the optical distortions of the photograph are corrected by the calibration information by moving the pixels of the photograph to correct positions.

In one embodiment, the light source is arranged to produce one wavelength.

In one embodiment, the light source is arranged to produce more than one wavelength.

In one embodiment, the light source is arranged simultaneously to emit red substantially monochromatic and coherent electromagnetic radiation, green substantially monochromatic and coherent electromagnetic radiation and blue substantially monochromatic and coherent electromagnetic radiation.

In one embodiment, the modeling arrangement comprises three light sources and a grating provided in connection with each light source, wherein the first light source is arranged to emit red substantially monochromatic and coherent electromagnetic radiation, the second light source is arranged to emit green substantially monochromatic and coherent electromagnetic radiation and the third light source is arranged to emit blue substantially monochromatic and coherent electromagnetic radiation.

Further in one embodiment, the method comprises analyzing a second photograph of the surface to be modeled taken by the camera from the same position, which second photograph does not contain the diffraction pattern projected on the surface to be modeled; and giving RGB values for the points of said network of points by interpolating the corresponding pixels of the second photograph.

In one embodiment, the identification of the points of the network of points produced by the diffraction pattern is made by using the color order of the points formed by several different wavelengths emitted by one diffraction source.

According to a third aspect of the invention, a computer program is disclosed comprising program code arranged to perform the method according to the second aspect, when the program code is executed by a processor. The computer program may in one embodiment be provided on a computer-readable medium.

According to a fourth aspect of the invention, there is provided a data processing device comprising means for performing the method according to the second aspect.

According to a fifth aspect of the invention, a system is disclosed for modeling the topography of a three-dimensional surface. The system comprises the modeling arrangement according to the first aspect; and the data processing device according to the fourth aspect.

### LIST OF FIGURES

The invention will be described below in detail by means of examples of embodiments, wherein
Fig. 1 shows one embodiment of the modeling arrangement according to the invention,
Fig. 2A shows another embodiment of the modeling arrangement according to the invention,
Fig. 2B shows another embodiment of the modeling arrangement according to the invention,
Fig. 3A shows another embodiment of the modeling arrangement according to the invention,
Fig. 3B shows another embodiment of the modeling arrangement according to the invention,
Fig. 4 shows a block diagram of one embodiment of the method of modeling the topography of a three-dimensional surface according to the invention,
Fig. 5 shows a block diagram of another embodiment of the method of modeling the topography of a three-dimensional surface according to the invention,
Fig. 6 shows a block diagram of another embodiment of the method of modeling the topography of a three-dimensional surface according to the invention, and
Fig. 7 shows one embodiment of the system according to the invention.

### DETAILED DESCRIPTION OF THE INVENTION

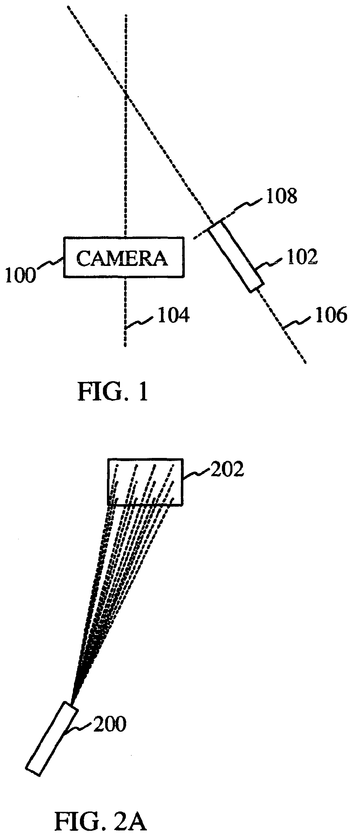

Fig. 1 shows one embodiment of the modeling arrangement according to the invention. The modeling arrangement according to Fig. 1 comprises an optical sensor 100, for example a digital camera. The modeling arrangement also comprises a diffraction source 102 arranged to produce substantially monochromatic and coherent electromagnetic radiation. Such radiation may be produced for example by a laser. The diffraction source 102 also comprises a grating or a grating network on which the radiation produced by the laser is focused. The diffraction source is arranged to produce a diffraction pattern of a known geometry on a surface to be modeled. The pattern produced by the diffraction source is a diffraction pattern that accurately complies with a mathematical-physical model, wherein the beam output angles are very accurately known. The diffraction source 102 may produce radiation that contains only one wavelength or a plurality of wavelengths at the same time, for example red, green and blue coherent light.

In Fig. 1, the modeling arrangement is so calibrated that the relative orientations of the optical axis 104 of the camera and the diffraction axis 106 are known and that the position, distance and orientation of the output point of the grating to the starting point of the optical axis of the camera 100 are known. The calibration also takes into account the optical distortions of the lens of the camera.

Fig. 2A shows an example diffraction pattern 202 produced by the diffraction source 200 on the surface of interest. The pattern produced by the diffraction source 200 is a diffraction pattern that accurately complies with a mathematical-physical model, wherein the beam output angles are very accurately known. The geometry of the points of a network of points of the diffraction pattern produced by the diffraction source 200 depends on the grating used in the diffraction source, and any suitable point geometry can be used.

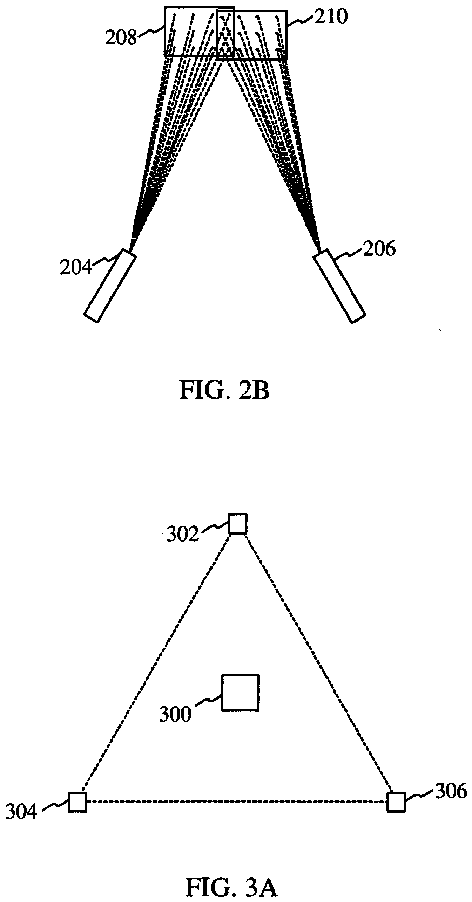

Fig. 2B shows another example diffraction pattern 208 and 210 which is produced by the diffraction sources 204 and 206 on the surface of interest. In the example of Fig. 2B, two separate diffraction sources produce overlapping diffraction patterns 208 and 210 on the surface of interest.

Fig. 3A shows another embodiment of the modeling arrangement according to the invention. In the modeling arrangement of Fig. 3A, three separate diffraction sources 302, 304, 306 are provided at the vertices of a substantially equilateral triangle, and the camera 300 is provided at the center of the triangle. This provides a symmetrical and directionally uniform resolution and accuracy of depth. As in the case of Fig. 1, in one embodiment of Fig. 3A the modeling arrangement is so calibrated that the relative orientations of the optical axis of the camera 300 and the diffraction axes are known and that the position, distance and orientation of the output points of the gratings of the diffraction sources to the starting point of the optical axis of the camera are known.

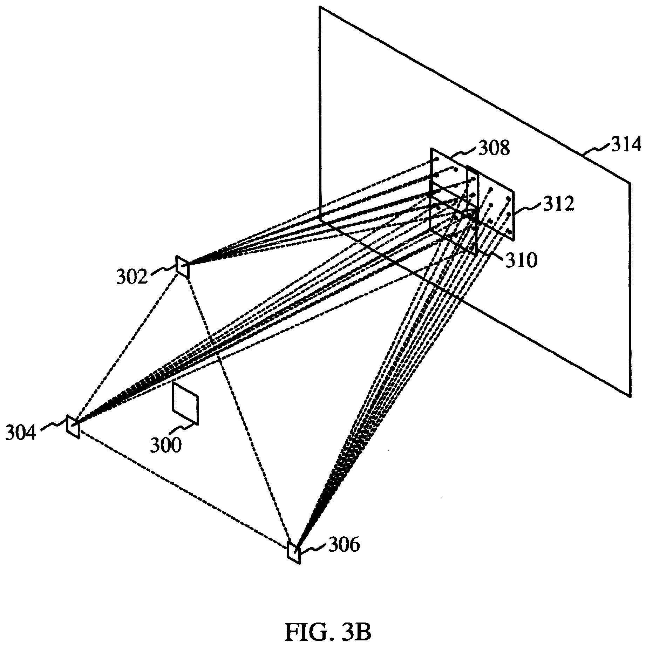

Fig. 3B shows in more detail the modeling arrangement shown in Fig. 3A. As shown in Fig. 3A, three separate diffraction sources 302, 304, 306 are provided at the vertices of a substantially equilateral triangle, and the camera 300 is provided at the center of the triangle. Each of the diffraction sources projects its own diffraction pattern 308, 310, 312 on the surface 314 to be modeled. In Fig. 3B, the diffraction patterns 308, 310, 312 projected by the diffraction sources overlap with each other.

In one embodiment of Fig. 3B, a red, green and blue set of laser diffraction points from three different directions are simultaneously used, and thus threefold data is obtained for the object, each one stored, when one photograph is being taken, on the RGB channels of the same photograph. In this case, random occurrence of the diffraction points on the same pixels gives a possibility to evaluate the calculation accuracy within the photograph by allowing the position of the same point to be calculated from two different directions.

Although Fig. 1, 3A and 3B show the use of only one camera, in other embodiments of the invention, more than one camera may be used at the same time. Likewise, any number of diffraction sources may be provided in the modeling arrangement and, in each laser diffraction source, any number of wavelengths instead of one wavelength may be used. Further, in one embodiment of the invention the same wavelength may be used in two different diffraction sources. In this case, however, the points of the network of points of the different diffraction sources may not overlap with each other in the photograph.

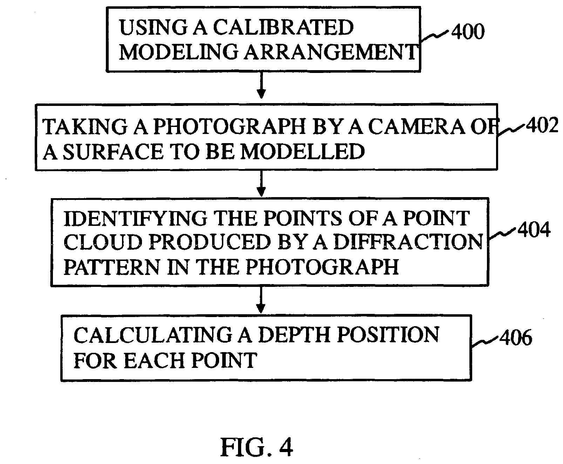

Fig. 4 shows a block diagram of one embodiment of the method of modeling the topography of a three-dimensional surface according to the invention. In step 400, a calibrated modeling arrangement is used comprising a camera, a light source arranged to produce substantially monochromatic and coherent electromagnetic radiation, and a grating provided in connection with the light source, wherein after calibration the relative orientations of the optical axis of the camera and the diffraction axis are known and that the position, distance and orientation of the output point of the grating to the starting point of the optical axis of the camera are known. In other words, the relative positioning of the elements of the system as to each other is accurately known. The calibration may also comprise observation of the extent, nature and direction of optical distortions caused by the lens of the camera (lens equation coefficients) . The light source and the grating provided in connection with the light source are arranged jointly to produce a diffraction pattern of a known geometry on the surface to be modeled. The pattern produced by the diffraction source is a diffraction pattern that accurately complies with a mathematical-physical model, wherein the beam output angles are very accurately known. In step 402, a photograph is taken by the camera of the surface to be modeled on which the diffraction pattern has been produced by said modeling arrangement. The photographing may be performed from several different positions so that enough photographic material is obtained of the surface to be modeled.

The resulting image files are automatically transferred from the camera to a processing computer for example by means of a memory card of the camera using wireless data transfer and a wireless data transfer network. In step 404, the image files transferred from the memory card are analyzed on the computer and the points of a network of points produced by the diffraction pattern are identified in the photograph. In one embodiment of the invention where one diffraction source emits several different wavelengths, the identification of the points can be carried out using the color order of the points formed by several different wavelengths emitted by one diffraction source. If one diffraction source emits only one wavelength, the identification can be made by using for example intelligent point analysis. The central beam of the diffraction source is identifiable in the photograph due to its highest intensity, and calculations from it may be performed in four directions.

In step 406, a 3D depth position is calculated for each point from a projection transition of the longitude and latitude coordinates by triangulation calculation. In the photograph, the distance of each diffraction point projected on the photographed surface from the sensor of the camera can be calculated trigonometrically. In addition, if the position and photographing direction of the camera are known, global three-dimensional X, Y and Z coordinates can be calculated for the diffraction points. Thus, it is possible to form in the manner described above an accurate model of the topography of a three-dimensional surface.

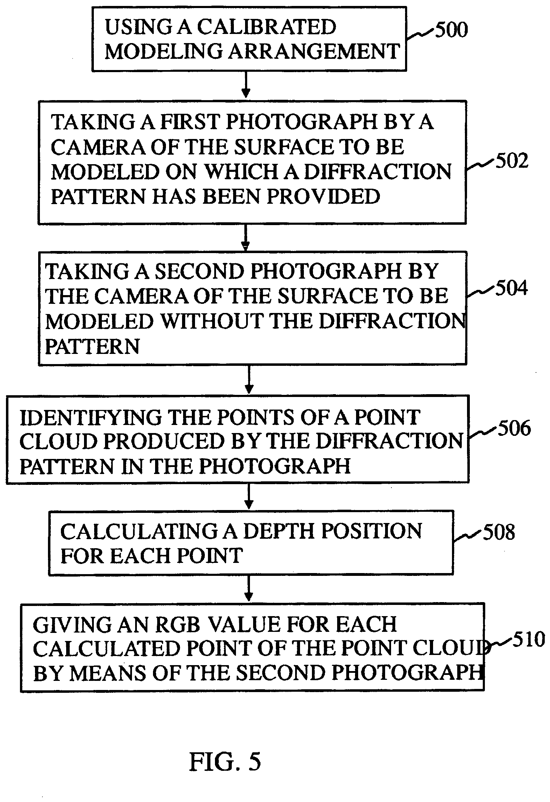

Fig. 5 shows a block diagram of another embodiment of the method of modeling the topography of a three-dimensional surface according to the invention. In step 500, a modeling arrangement is calibrated, the modeling arrangement comprising a camera arranged to photograph the surface to be modeled at wavelengths emitted by a light source as well as wavelengths detected by the human eye, a light source arranged to produce substantially monochromatic and coherent electromagnetic radiation, and a grating provided in connection with the light source, so that the relative orientations of the optical axis of the camera and the diffraction axis are known and that the position, distance and orientation of the output point of the grating to the starting point of the optical axis of the camera are known. In other words, the relative positioning of the elements of the arrangement as to each other is accurately known. The calibration may also comprise observation of the extent, nature and direction of optical distortions caused by the lens of the camera. In one embodiment, the calibration of the lens is performed only once, and optical distortions of the photograph are corrected by the obtained calibration information by moving the pixels of the photograph to the correct positions.

The light source and the grating provided in connection with the light source are jointly arranged to produce a diffraction pattern of a known geometry on the surface to be modeled. The pattern produced by the diffraction source is a diffraction pattern that accurately complies with a mathematical-physical model, wherein the beam output angles are very accurately known.

In step 502, a first photograph is taken by the camera of the surface to be modeled on which the diffraction pattern has been produced by said modeling arrangement. The photographing may be performed from several different positions so that enough photographic material is obtained of the surface to be modeled. In step 504, a second photograph is taken by the camera of the surface to be modeled without the diffraction pattern.

The resulting image files are automatically transferred from the camera to a processing computer for example by means of a memory card of the camera using wireless data transfer. In step 506, the image files transferred from the memory card are analyzed on the computer and the points of a network of points produced by the diffraction pattern are identified in the photograph. In one embodiment of the invention where one diffraction source emits several different wavelengths, the identification of the points can be carried out using the color order of the points formed by several different wavelengths emitted by one diffraction source. If one diffraction source emits only one wavelength, the identification can be made for example by using intelligent point analysis. The central beam of the diffraction source is identifiable due to its highest intensity in the photograph, and calculation from it may be performed in four directions. In step 508, a 3D depth position is calculated for each point from a projection transition of the longitude and latitude coordinates by triangulation calculation. In the photograph, the distance of each diffraction point projected on the photographed surface from the sensor of the camera can be calculated trigonometrically. In addition, if the position and photographing direction of the camera are known, global three-dimensional X, Y and Z coordinates can be calculated for the diffraction points. In step 510, each calculated point of the network of points is given an RGB value by means of the second photograph for example by interpolating the corresponding pixels of the second photograph. As a result, the surface model will appear to the viewer as a photorealistic model of the real surface. Thus, it is possible in the manner described above to form an accurate model of the topography of a three-dimensional surface.

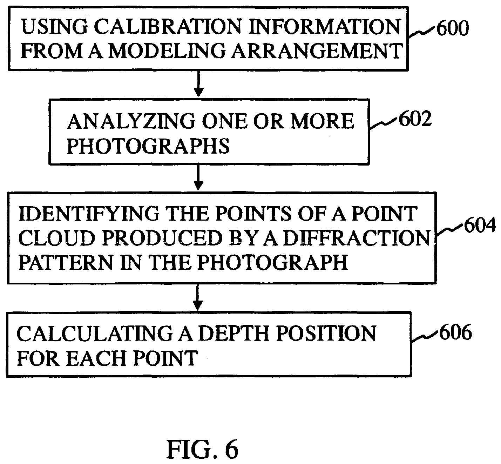

Fig. 6 shows a block diagram of another embodiment of the method of modeling the topography of a three-dimensional surface according to the invention.

In step 600, calibration information from a modeling arrangement is used, the modeling arrangement comprising a camera which is arranged to photograph the surface to be modeled at wavelengths emitted by a light source as well as wavelengths detected by the human eye, a light source which is arranged to produce substantially monochromatic and coherent electromagnetic radiation, and a grating provided in connection with the light source. The calibration information indicates the relative orientations of the optical axis of the camera and the diffraction axis, and the position, distance and orientation of the output point of the grating to the starting point of the optical axis of the camera as well as the geometry of the diffraction pattern produced by the modeling arrangement as well as the calibration information that corrects the optical distortions of the lens of the camera. In other words, the calibration information indicates for example the relative positioning of the elements of the system as to each other in an accurate manner.

In step 602, a photograph of the surface to be modeled on which the diffraction pattern has been produced by said modeling arrangement is analyzed. The diffraction pattern is a diffraction pattern that accurately complies with a mathematical-physical model, wherein the beam output angles are very accurately known. In step 604, the points of a network of points produced by the diffraction pattern are identified in the photograph. In step 606, a 3D depth position is calculated for each point from a projection transition of the longitude and latitude coordinates by triangulation calculation. In the photograph, the distance of each diffraction point projected on the photographed surface from the sensor of the camera can be calculated trigonometrically. In addition, if the position and photographing direction of the camera are known, global three-dimensional X, Y and Z coordinates can be calculated for the diffraction points.

In one embodiment of Fig. 6, a second photograph of the surface to be modeled taken by the camera from the same position is also analyzed, wherein the second photograph does not contain the diffraction pattern projected on the surface to be modeled. By interpolating the corresponding pixels of the second photograph, the points of said network of points are given RGB values. This way, the viewer will see the surface model as a photorealistic model of the real surface.

The embodiment relating to Fig. 6 above is preferably performed by a computer program executed on a computer that processes the photographic material.

Although the embodiments above have only disclosed analysis based on separate photographs, it is obvious for a person skilled in the art also to apply the invention so that several individual photographs are combined into a larger unity of the surface to be modeled. In this case, the modeling arrangement described in the invention can be manually or automatically moved in the photographing situation so that the desired unity can be modeled.

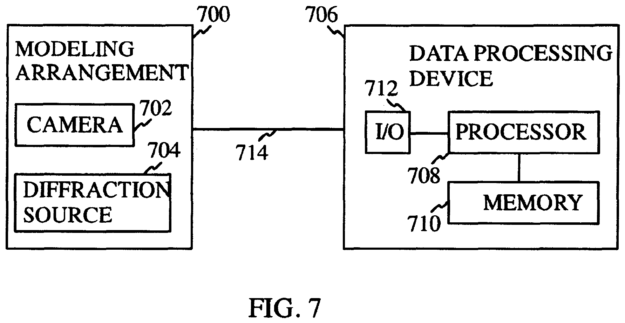

Fig. 7 shows one embodiment of the system according to the invention. The system comprises a modeling arrangement 700 comprising one or more cameras 702. The modeling arrangement also comprises one or more diffraction sources 704 which are arranged to produce substantially monochromatic and coherent electromagnetic radiation. Such radiation may be produced for example by a laser. The diffraction source 702 also comprises a grating or a grating network on which the radiation produced by the laser is focused. The diffraction source is arranged to produce a diffraction pattern of a known geometry on the surface to be modeled. The pattern produced by the diffraction source is a diffraction pattern that accurately complies with a mathematical-physical model, wherein the beam output angles are very accurately known. The diffraction source 102 may produce coherent radiation that contains only one wavelength or a plurality of wavelengths at the same time, for example red, green and blue coherent light. The diffraction pattern produced on the surface to be modeled is photographed by the camera 702.

The information stored by the camera 702 is transferred through a data transfer connection 714 to a data processing device 706. The data transmission connection 714 may refer to a data transfer connection provided between the camera 702 and the data processing device. The data transfer connection 714 can be implemented for example so that the camera 702 or the memory card of the camera 702 sends, using a wireless data transfer network, image files directly to the data processing device 706, a cloud service or any destination accessible through the data transfer network. The data processing device 706 may also read information directly from the memory card through a data transfer interface 712. Thus, the data processing device 706 may be provided in immediate proximity to the modeling arrangement 700 or alternatively the data processing device 706 may be physically present in any other location, as long as the data processing device 706 is able to download the photographs taken by the camera 702 through a data communication network, for example the Internet.

The data processing device 706 comprises at least one or more processors 708 and one or more memories 710 connected to the processor 708. Through the data transfer interface 712, the data processing device 706 may receive information from outside the device. The memory 710 may contain one or more computer programs containing program code which is arranged to perform the method steps described in the invention.

The embodiments of the invention described above may be used in many different application environments, for example in measuring the walls of a tunnel, rock material identification, forest applications (for example in evaluating a forest stand) or any other application for modeling a surface form or for example calculating a volume on the basis of surface forms.

The above-described one or more embodiments of the invention have significant advantages over other methods and the embodiments may include one or more of the following advantages: the calculation required in the embodiments is light and can be performed in real time, the measurement operation is quick and can be shortly repeated, the apparatus is easily movable and the measurement results in beneficial measurement geometries are more accurate than with other photogrammetrical methods.

The embodiments are described above by way of example only, and the hardware used to carry out these embodiments may vary in many ways, as persons skilled in the hardware and/or software art will appreciate. The functionality of one or more components of the example embodiments may be implemented for example by one or more apparatus and/or a computer program executed on a computer.

The example embodiments may store information related to the different processes described herein. This information may be stored in one or more memories, such as a hard disk, optical disk, RAM memory etc. One or more memories or databases may store the information used to carry out the example embodiments of the present invention.

The example embodiments as a whole or parts of them may be carried out using one or more general-purpose processors, microprocessors, DSP processors, microcontrollers etc., which are programmed according to the teachings of the example embodiments of the present invention, as persons skilled in the computer and/or software art will appreciate.

Any computer-readable medium or combination of media may store the computer program or computer program product for executing the processing to be executed to carry out the invention as a whole or in part (if the processing is distributed).

The devices for use in the embodiments of the invention may include computer-readable media or memories containing commands programmed according to the teachings of the present invention with data structures, tables, records and/or other data described herein. The computer readable-media may include any suitable medium participating in providing commands to the processor for their execution. Such a medium may be provided in many different forms, including non-volatile memories, volatile memories, transfer media, etc., without being limited to the afore-said. The non-volatile memories may include for example optical or magnetic disks, magnetooptical disks, etc. The volatile memories may include dynamic memories, etc. The transfer media may include coaxial cables, copper wire, optical fiber, etc. The transfer media may also be provided in the form of acoustic, optical, electromagnetic etc. waves, such as in the form of waves formed during radio-frequency communication, infrared data transfer, etc. General embodiments of computer-readable media may include for example a computer disk, hard disk, magnetic tape, any other suitable magnetic medium, CD-ROM disk, CD-R disk, CD-RW disk, DVD disk, DVD-ROM disk, DVD±RW disk, DVD±R disk, any other suitable optical medium, RAM memory, ROM memory, EPROM memory, FLASH-EPROM memory, any other suitable memory chip or any other suitable medium readable by a processor or a computer. The devices for use in the embodiments of the invention may also include data transfer means by which information is sent and received using a wired or wireless data transfer connection.

The invention is not limited merely to the above embodiment examples; instead, many modifications are possible within the scope defined by the claims.

## Claims

1. A modeling arrangement for modeling the topography of a three-dimensional surface, comprising:
a light source (102, 200) arranged to produce substantially monochromatic and coherent electromagnetic radiation;
a camera (100) arranged to photograph the surface to be modeled at wavelengths emitted by the light source (102, 200) as well as wavelengths detected by the human eye; and
a grating (102) provided in connection with the light source (102, 200);
wherein the light source (102, 200) and the grating (102) provided in connection with the light source (102, 200) are arranged jointly to produce a diffraction pattern of a known geometry on the surface to be modeled, wherein the diffraction pattern (202) is a pattern that accurately complies with a mathematical-physical model and wherein beam output angles of the diffraction pattern (202) are accurately known based on the mathematical-physical model; and
the modeling arrangement being calibrated, and hence having calibration information, so that the relative orientations of the optical axis of the camera (100) and the diffraction axis are known and that the position, distance and orientation of the output point of the grating (102) to the starting point of the optical axis of the camera (100) are known and so that the calibration takes into account the calibration information that corrects the optical distortions of the lens of the camera (100),
the modelling arrangement configured to calculate a depth position of each point of a network of points produced by the diffraction pattern based on a single photograph of the camera (100) using the calibration information from the modelling arrangement, wherein the optical distortions of the photograph are corrected by the calibration information by moving the pixels of the photograph to correct positions.

2. The modeling arrangement according to claim 1, wherein the light source (102, 200) is arranged to produce one wavelength.

3. The modeling arrangement according to claim 1 or 2, wherein the light source (102, 200) is arranged to produce more than one wavelength.

4. The modeling arrangement according to claim 3, wherein the light source (102, 200) is arranged to simultaneously emit red substantially monochromatic and coherent electromagnetic radiation, green substantially monochromatic and coherent electromagnetic radiation and blue substantially monochromatic and coherent electromagnetic radiation.

5. The modeling arrangement according to claim 1 or 2, comprising three light sources (302, 304, 306) and a grating provided in connection with each light source,
wherein the first light source is arranged to emit red substantially monochromatic and coherent electromagnetic radiation, the second light source is arranged to emit green substantially monochromatic and coherent electromagnetic radiation and the third light source is arranged to emit blue substantially monochromatic and coherent electromagnetic radiation.

6. A computer-implemented method for modeling the topography of a three-dimensional surface, the method comprising:
using calibration information from a modeling arrangement comprising a camera (100) arranged to photograph the surface to be modeled at wavelengths emitted by a light source (102, 200) as well as wavelengths detected by the human eye, a light source (102, 200) arranged to produce substantially monochromatic and coherent electromagnetic radiation, and a grating (102) provided in connection with the light source (102, 200);
wherein the calibration information indicates the relative orientations of the optical axis of the camera (100) and the diffraction axis, and the position, distance and orientation of the output point of the grating (102) to the starting point of the optical axis of the camera (100) as well as the geometry of the diffraction pattern (202) produced by the modeling arrangement as well as the calibration information that corrects the optical distortions of the lens of the camera (100), wherein the diffraction pattern (202) is a pattern that accurately complies with a mathematical-physical model and wherein beam output angles of the diffraction pattern are accurately known based on the mathematical-physical model;
analyzing a first photograph of the surface to be modeled on which the diffraction pattern has been produced by said modeling arrangement;
identifying the points of a network of points produced by the diffraction pattern in the first photograph; and
calculating a depth position for each point using the calibration information from the modelling arrangement, wherein the optical distortions of the photograph are corrected by the calibration information by moving the pixels of the photograph to correct positions.

7. The computer-implemented method according to claim 6, wherein the light source (102, 200) is arranged to produce one wavelength.

8. The computer-implemented method according to claim 6, wherein the light source (102, 200) is arranged to produce more than one wavelength.

9. The computer-implemented method according to claim 8, wherein the light source (102, 200) is arranged simultaneously to emit red substantially monochromatic and coherent electromagnetic radiation, green substantially monochromatic and coherent electromagnetic radiation and blue substantially monochromatic and coherent electromagnetic radiation.

10. The computer-implemented method according to claim 6, wherein the modeling arrangement comprises three light sources (302, 304, 306) and a grating provided in connection with each light source,
wherein the first light source is arranged to emit red substantially monochromatic and coherent electromagnetic radiation, the second light source is arranged to emit green substantially monochromatic and coherent electromagnetic radiation and the third light source is arranged to emit blue substantially monochromatic and coherent electromagnetic radiation.

11. The computer-implemented method according to claim 6, further comprising:
analyzing a second photograph of the surface to be modeled taken by the camera (100) from the same position, which second photograph does not contain the diffraction pattern (102) projected on the surface to be modeled; and
giving RGB values for the points of said network of points by interpolating the corresponding pixels of the second photograph.

12. The computer-implemented method according to any of claims 6 - 11, wherein the identification of the points of the network of points produced by the diffraction pattern (102) is made by using the color order of the points formed by several different wavelengths emitted by one diffraction source.

13. A computer program, comprising program code arranged to perform the method according to any one of claims 6 - 12 when the program code is executed by a processor.

14. A data processing device comprising means for performing (708, 710, 712) the method according to any of claims 6 - 12.

15. A system for modeling the topography of a three-dimensional surface, the system comprising:
the modeling arrangement according to any one of claims 1 - 5; and
the data processing device (706) according to claim 14.

## Patentansprüche

1. Modellierungsanordnung zum Modellieren der Topografie einer dreidimensionalen Oberfläche, aufweisend:
eine Lichtquelle (102, 200), die angeordnet ist, um im Wesentlichen monochromatische und kohärente elektromagnetische Strahlung zu erzeugen;
eine Kamera (100), die angeordnet ist, um die zu modellierende Oberfläche bei Wellenlängen zu fotografieren, die von der Lichtquelle (102, 200) emittiert wurden, wie auch Wellenlängen, die von dem menschlichen Auge erfaßbar sind; und
ein Gitter (102), das in Verbindung mit der Lichtquelle (102, 200) vorgesehen ist;
wobei die Lichtquelle (102, 200) und das in Verbindung mit der Lichtquelle (102, 200) vorgesehene Gitter (102) gemeinsam angeordnet sind, um ein Beugungsmuster eine bekannten Geometrie auf der zu modulierenden Oberfläche zu erzeugen, wobei das Beugungsmuster (202) ein Muster ist, das akkurat übereinstimmt mit einem mathematisch physikalischen Modell und wobei Strahlausgangswinkel des Beugungsmusters (202) basierend auf dem mathematisch physikalischen Modell akkurat bekannt sind; und
die Modellierungsanordnung kalibriert ist und folglich Kalibrierinformation aufweist, so dass die relativen Orientierungen der optischen Achse der Kamera (100) und der Beugungsachse bekannt sind und dass die Position, der Abstand und die Orientierung des Ausgangspunkts des Gitters (102) zu dem Startpunkt der optischen Achse der Kamera (100) bekannt sind und so dass die Kalibrierung die Kalibrierinformation berücksichtigt, welche die optischen Verzerrungen der Linse der Kamera (100) korrigiert,
wobei die Modellierungsanordnung ausgestaltet ist, um eine Tiefenposition jedes Punktes eines Netzwerks an Punkten zu berechnen, das durch das Beugungsmuster erzeugt wird, basierend auf einer einzelnen Aufnahme der Kamer (100) unter Verwendung der Kalibrierinformation von der Modellierungsanordnung, wobei die optischen Verzerrungen der Aufnahme korrigiert werden durch die Kalibrierinformation über eine Bewegung der Pixel der Aufnahme in korrekte Positionen.

2. Modellierungsanordnung nach Anspruch 1, wobei die Lichtquelle (102, 200) angeordnet ist, um eine Wellenlänge zu erzeugen.

3. Modellierungsanordnung nach Anspruch 1 oder 2, wobei die Lichtquelle (102, 200) angeordnet ist, um mehr als eine Wellenlänge zu erzeugen.

4. Modellierungsanordnung nach Anspruch 3, wobei die Lichtquelle (102, 200) angeordnet ist, um gleichzeitig rote, im Wesentlichen monochromatische und kohärente elektromagnetische Strahlung, grüne, im Wesentlichen monochromatische und kohärente elektromagnetische Strahlung und blaue, im Wesentlichen monochromatische und kohärente elektromagnetische Strahlung zu emittieren.

5. Modellierungsanordnung nach Anspruch 1 oder 2, aufweisend drei Lichtquellen (302, 304, 306) und ein Gitter, das in Verbindung mit jeder Lichtquelle vorgesehen ist,
wobei die erste Lichtquelle angeordnet ist, um rote, im Wesentlichen monochromatische und kohärente elektromagnetische Strahlung zu emittieren, die zweite Lichtquelle angeordnet ist, um grüne, im Wesentlichen monochromatische und kohärente elektromagnetische Strahlung zu emittieren und die dritte Lichtquelle angeordnet ist, um blaue, im Wesentlichen monochromatische und kohärente elektromagnetische Strahlung zu emittieren.

6. Computerimplementiertes Verfahren zum Modellieren der Topografie einer dreidimensionalen Oberfläche, wobei das Verfahren aufweist:
ein Verwenden von Kalibrierinformation von einer Modellierungsanordnung, umfassend eine Kamera (100), die angeordnet ist, um die zu modellierende Oberfläche zu fotografieren bei Wellenlängen, die von einer Lichtquelle (102, 200) emittiert werden, wie auch Wellenlängen, die von dem menschlichen Auge erfaßbar sind, eine Lichtquelle (102, 200), die angeordnet ist, um im Wesentlichen monochromatische und kohärente elektromagnetische Strahlung zu erzeugen und ein Gitter (102), das in Verbindung mit der Lichtquelle (102, 200) vorgesehen ist;
wobei die Kalibrierinformation die relativen Orientierungen der optischen Achse der Kamera (100) und der Beugungsachse angibt sowie die Position, den Abstand und die Orientierung des Ausgangspunkts des Gitters (102) zu dem Startpunkt der optischen Achse der Kamera (100), wie auch die Geometrie des von den Modellierungsanordnung erzeugten Beugungsmusters (202), wie auch die Kalibrierinformation, welche die optischen Verzerrungen der Linse der Kamera (100) korrigiert, wobei das Beugungsmuster (202) ein Muster ist, das akkurat mit einem mathematisch physikalischen Modell übereinstimmt und wobei Strahlungsausgangswinkel des Beugungsmusters basierend auf dem mathematisch physikalischen Modell akkurat bekannt sind;
ein Analysieren einer ersten Aufnahme der zu modellierenden Oberfläche, auf der das Beugungsmuster durch die Modellierungsanordnung erzeugt wurde;
ein Identifizieren der Punkte eines Netzwerks an Punkten, das von dem Beugungsmuster in der ersten Aufnahme erzeugt wurde; und
ein Berechnen einer Tiefenposition für jeden Punkt unter Verwendung der Kalibrierinformation von der Modellierungsanordnung, wobei die optischen Verzerrungen der Aufnahme korrigiert werden durch die Kalibrierinformation über ein Bewegen der Pixel der Aufnahme in korrekte Positionen.

7. Computerimplementiertes Verfahren nach Anspruch 6, wobei die Lichtquelle (102, 200) angeordnet ist, um eine Wellenlänge zu erzeugen.

8. Computerimplementiertes Verfahren nach Anspruch 6, wobei die Lichtquelle (102, 200) angeordnet ist, um mehr als eine Wellenlänge zu erzeugen.

9. Computerimplementiertes Verfahren nach Anspruch 8, wobei die Lichtquelle (102, 200) angeordnet ist, um gleichzeitig rote, im Wesentlichen monochrome und kohärente elektromagnetische Strahlung, grüne, im Wesentlichen monochromatische und kohärente elektromagnetische Strahlung und blaue, im Wesentlichen monochromatische und kohärente elektromagnetische Strahlung zu emittieren.

10. Computerimplementiertes Verfahren nach Anspruch 6, wobei die Modellierungsanordnung drei Lichtquellen (302, 304, 306) umfasst, sowie ein Gitter, das in Verbindung mit jeder Lichtquelle vorgesehen ist,
wobei die erste Lichtquelle angeordnet ist, um rote, im Wesentlichen monochromatische und kohärente elektromagnetische Strahlung zu emittieren, die zweite Lichtquelle angeordnet ist, um grüne, im Wesentlichen monochromatische und kohärente elektromagnetische Strahlung zu emittieren und die dritte Lichtquelle angeordnet ist, um blaue, im Wesentlichen monochromatische und kohärente elektromagnetische Strahlung zu emittieren.

11. Computerimplementiertes Verfahren nach Anspruch 6, ferner umfassend:
ein Analysieren einer zweiten Aufnahme der zu modellierenden Oberfläche, die von der Kamera (100) aus der gleichen Position gemacht wurde, wobei die zweite Aufnahme das Beugungsmuster (102) nicht beinhaltet, das auf die zu modellierende Oberfläche projiziert wurde; und
ein Vorgeben von RGB-Werten für die Punkte des Netzwerks an Punkten durch Interpolieren der entsprechenden Pixel der zweiten Aufnahme.

12. Computerimplementiertes Verfahren nach einem der Ansprüche 6 - 11, wobei das Identifizieren der Punkte des Netzwerks an Punkten, das durch das Beugungsmuster (102) erzeugt wurde, vorgenommen wird durch Verwenden der Farbordnung der Punkte die ausgebildet sind durch mehrere unterschiedliche Wellenlängen, die von einer Beugungsquelle emittiert wurden.

13. Computerprogramm, umfassend einen Programmcode, der ausgelegt ist zum Durchführen des Verfahrens gemäß einem der Ansprüche 6 - 12, wenn der Programmcode durch einen Prozessor ausgeführt wird.

14. Datenverarbeitungsvorrichtung, umfassend Mittel zum Durchführen (708, 710, 712) des Verfahrens gemäß einem der Ansprüche 6 - 12.

15. System zum Modellieren der Topografie einer dreidimensionalen Oberfläche, wobei das System aufweist:
die Modellierungsanordnung nach einem der Ansprüche 1 - 5; und
die Datenverarbeitungsvorrichtung (706) nach Anspruch 14.

## Revendications

1. Agencement de modélisation pour modéliser la topographie d'une surface tridimensionnelle, comprenant :
une source lumineuse (102, 200) agencée pour produire un rayonnement électromagnétique sensiblement monochromatique et cohérent ;
une caméra (100) agencée pour photographier la surface à modéliser à des longueurs d'onde émises par la source lumineuse (102, 200) ainsi qu'à des longueurs d'onde détectées par l'œil humain ; et
une grille (102) fournie en liaison avec la source lumineuse (102, 200) ;
dans lequel la source lumineuse (102, 200) et la grille (102) fournie en liaison avec la source lumineuse (102, 200) sont agencées conjointement pour produire un motif de diffraction d'une géométrie connue sur la surface à modéliser, dans lequel le motif de diffraction (202) est un motif qui se conforme avec précision à un modèle mathématique-physique et dans lequel des angles de sortie de faisceau du motif de diffraction (202) sont connus avec précision sur la base du modèle mathématique-physique ; et
l'agencement de modélisation étant étalonné, et donc ayant des informations d'étalonnage, de sorte que les orientations relatives de l'axe optique de la caméra (100) et de l'axe de diffraction soient connues et que la position, la distance et l'orientation du point de sortie de la grille (102) par rapport au point de départ de l'axe optique de la caméra (100) soient connues et de sorte que l'étalonnage prenne en compte les informations d'étalonnage qui corrigent les distorsions optiques de la lentille de la caméra (100),
l'agencement de modélisation étant configuré pour calculer une position de profondeur de chaque point d'un réseau de points produits par le motif de diffraction sur la base d'une photographie unique de la caméra (100) en utilisant les informations d'étalonnage provenant de l'agencement de modélisation, dans lequel les distorsions optiques de la photographie sont corrigées par les informations d'étalonnage en déplaçant les pixels de la photographie vers des positions correctes.

2. Agencement de modélisation selon la revendication 1, dans lequel la source lumineuse (102, 200) est agencée pour produire une longueur d'onde.

3. Agencement de modélisation selon la revendication 1 ou 2, dans lequel la source lumineuse (102, 200) est agencée pour produire plus d'une longueur d'onde.

4. Agencement de modélisation selon la revendication 3, dans lequel la source lumineuse (102, 200) est agencée pour émettre simultanément un rayonnement électromagnétique rouge sensiblement monochromatique et cohérent, un rayonnement électromagnétique vert sensiblement monochromatique et cohérent et un rayonnement électromagnétique bleu sensiblement monochromatique et cohérent.

5. Agencement de modélisation selon la revendication 1 ou 2, comprenant trois sources lumineuses (302, 304, 306) et une grille fournie en liaison avec chaque source lumineuse,
dans lequel la première source lumineuse est agencée pour émettre un rayonnement électromagnétique rouge sensiblement monochromatique et cohérent, la deuxième source lumineuse est agencée pour émettre un rayonnement électromagnétique vert sensiblement monochromatique et cohérent et la troisième source lumineuse est agencée pour émettre un rayonnement électromagnétique bleu sensiblement monochromatique et cohérent.

6. Procédé mis en œuvre par ordinateur pour modéliser la topographie d'une surface tridimensionnelle, le procédé comprenant :
l'utilisation d'informations d'étalonnage provenant d'un agencement de modélisation comprenant une caméra (100) agencée pour photographier la surface à modéliser à des longueurs d'onde émises par une source lumineuse (102, 200) ainsi qu'à des longueurs d'onde détectées par l'œil humain, une source lumineuse (102, 200) agencée pour produire un rayonnement électromagnétique sensiblement monochromatique et cohérent, et une grille (102) fournie en liaison avec la source lumineuse (102, 200) ;
dans lequel les informations d'étalonnage indiquent les orientations relatives de l'axe optique de la caméra (100) et de l'axe de diffraction, et la position, la distance et l'orientation du point de sortie de la grille (102) par rapport au point de départ de l'axe optique de la caméra (100) ainsi que la géométrie du motif de diffraction (202) produit par l'agencement de modélisation ainsi que les informations d'étalonnage qui corrigent les distorsions optiques de la lentille de la caméra (100), dans lequel le motif de diffraction (202) est un motif qui se conforme avec précision à un modèle mathématique-physique et dans lequel des angles de sortie de faisceau du motif de diffraction sont connus avec précision sur la base du modèle mathématique-physique ;
l'analyse d'une première photographie de la surface à modéliser sur laquelle le motif de diffraction a été produit par ledit agencement de modélisation ;
l'identification des points d'un réseau de points produits par le motif de diffraction dans la première photographie ; et
le calcul d'une position de profondeur pour chaque point en utilisant les informations d'étalonnage provenant de l'agencement de modélisation, dans lequel les distorsions optiques de la photographie sont corrigées par les informations d'étalonnage en déplaçant les pixels de la photographie vers des positions correctes.

7. Procédé mis en œuvre par ordinateur selon la revendication 6, dans lequel la source lumineuse (102, 200) est agencée pour produire une longueur d'onde.

8. Procédé mis en œuvre par ordinateur selon la revendication 6, dans lequel la source lumineuse (102, 200) est agencée pour produire plus d'une longueur d'onde.

9. Procédé mis en œuvre par ordinateur selon la revendication 8, dans lequel la source lumineuse (102, 200) est agencée pour émettre simultanément un rayonnement électromagnétique rouge sensiblement monochromatique et cohérent, un rayonnement électromagnétique vert sensiblement monochromatique et cohérent et un rayonnement électromagnétique bleu sensiblement monochromatique et cohérent.

10. Procédé mis en œuvre par ordinateur selon la revendication 6, dans lequel l'agencement de modélisation comprend trois sources lumineuses (302, 304, 306) et une grille fournie en liaison avec chaque source lumineuse,
dans lequel la première source lumineuse est agencée pour émettre un rayonnement électromagnétique rouge sensiblement monochromatique et cohérent, la deuxième source lumineuse est agencée pour émettre un rayonnement électromagnétique vert sensiblement monochromatique et cohérent et la troisième source lumineuse est agencée pour émettre un rayonnement électromagnétique bleu sensiblement monochromatique et cohérent.

11. Procédé mis en œuvre par ordinateur selon la revendication 6, comprenant en outre le fait de :
analyser une deuxième photographie de la surface à modéliser prise par la caméra (100) à partir de la même position, laquelle deuxième photographie ne contient pas le motif de diffraction (102) projeté sur la surface à modéliser ; et
donner des valeurs RVB pour les points dudit réseau de points en interpolant les pixels correspondants de la deuxième photographie.

12. Procédé mis en œuvre par ordinateur selon l'une des revendications 6 à 11, dans lequel l'identification des points du réseau de points produits par le motif de diffraction (102) est effectuée en utilisant l'ordre des couleurs des points formés par plusieurs longueurs d'onde différentes émies par une source de diffraction.

13. Programme informatique, comprenant un code de programme agencé pour effectuer le procédé selon l'une quelconque des revendications 6 à 12 lorsque le code de programme est exécuté par un processeur.

14. Dispositif de traitement de données comprenant des moyens pour effectuer (708, 710, 712) le procédé selon l'une des revendications 6 à 12.

15. Système de modélisation de la topographie d'une surface tridimensionnelle, le système comprenant :
l'agencement de modélisation selon l'une quelconque des revendications 1 à 5 ; et
le dispositif de traitement de données (706) selon la revendication 14.
